# EUROPEAN PATENT APPLICATION

(11) **EP 4 095 679 A1**
(43) Date of publication of application: **30.11.2022**
(21) Application number: 21176292.7
(22) Date of filing: 27.05.2021
(51) Int. Cl.: G06F 8/61, G06F 8/71, G06F 9/455

(54) **DELIVERING A NEW VERSION OF AN INDUSTRIAL EDGE APPLICATION**

(71) Applicant: Siemens Aktiengesellschaft, 80333 München (DE)
(72) Inventor: Milovanovic, Igor, 90491 Nürnberg (DE); Hoch, Maximilian, 91325 Adelsdorf (DE); Spiller, Michael, 90459 Nürnberg (DE)

(57) **Abstract**

A method of delivering a new version of an industrial edge application (10) to an industrial edge management system (30) in a multi-tiered software architecture (1, 2, 3), the method comprising the steps of: - creating, by a build pipeline (20) in a cloud tier (1) of the multi-tiered software architecture, the new version of the industrial edge application (10) and storing, by the build pipeline (20), the new version of the industrial edge application (10) in a software repository (21) of the build pipeline (20), - obtaining, by the industrial edge management system (30) in an edge tier (2) of the multi-tiered software architecture, a trigger indicating that the new version of the industrial edge application (10) is available in the software repository (21) of the build pipeline (20), - loading, by the industrial edge management system (30), based on the trigger the new version of the industrial edge application (10) from the software repository (21) of the build pipeline (20) to a software repository (31) of the industrial edge management system (30).

## Description

### BACKGROUND

In industrial environments, there is a class of industrial edge applications which requires frequent automated updates. For example, the applications which utilize machine learning models often require updates. The machine learning models are usually continuously trained, tested, improved, and pushed to production. This task can be easily solved, e.g., by providing an API (application programming interface) on every system which can be directly called from the previous step. This works well in relaxed network environments. However, it can become quite complicated in the complex tiered network architectures which are often found in production networks.

For example, European patent application publication EP 3 401 748 A1 discloses a METHOD FOR OPERATING AN INTERFACE DEVICE FOR AN AUTOMATION SYSTEM. Therein an interface device for communicating with automation hardware intended to control and/or monitor a technical process and comprising at least one automation device, and to a method for operating an interface device of this kind are disclosed.

### SUMMARY

The invention aims to solve the problem of pervasiveness of deployment pipelines in tiered network architectures by providing a possibility to publish one or more industrial edge applications to an industrial edge management system.

According to a first aspect the problem is solved by a method of delivering a new version of an industrial edge application to an industrial edge management system in a multi-tiered software architecture. The method comprising the step of creating, by a build pipeline in a cloud tier of the multi-tiered software architecture, the new version of the industrial edge application and storing, by the build pipeline, the new version of the industrial edge application in a software repository of the build pipeline. The method further comprising the step of obtaining, by the industrial edge management system in an edge tier of the multi-tiered software architecture, a trigger indicating that the new version of the industrial edge application is available in the software repository of the build pipeline. The method further comprising the step of loading, by the industrial edge management system, based on the trigger the new version of the industrial edge application from the software repository (21) of the build pipeline to a software repository of the industrial edge management system.

According to a second aspect the problem is solved by an industrial edge management system in a multi-tiered software architecture. The industrial edge management system is operative to obtain a trigger indicating that a new version of an industrial edge application is available in a software repository of a build pipeline. The industrial edge management system is further operative to load based on the trigger the new version of the industrial edge application from the software repository of a build pipeline to a software repository of the industrial edge management system.

According to a third aspect a multi-tiered software architecture comprising a build pipeline and an industrial edge management system according to the preceding aspect is proposed.

### BRIED DESCRIPTION OF THE DRAWINGS

Figure 1 shows a build pipeline producing an industrial edge app and publishing it to industrial edge management system.
Figure 2 shows a multi-tiered network architecture and a blocking firewall between an industrial edge publisher and a industrial edge management system.
Figure 3 shows a multi-tiered network architecture for publishing industrial edge apps to an industrial edge management system.
Figure 4 shows wrapping an industrial edge app in docker image.

### DETAILED DESCRIPTION

The increasing number of applications, also called application software, brings a new challenge to industrial environments. An application software, app for short, is a computing software designed to carry out a specific task, e.g., in an industrial environment, other than one relating to the operation of the computer itself. These applications have often been developed by different project teams, with more focus on agile application development than on minimizing the effort of application scaling, e.g., across the different production sites of a company, and/or application management, e.g., comprising continuous software and/or security updates. This is why application scaling and management have to deal with high complexity, for example caused by the usage of different operating systems, different legacy systems for data collection, and different user management systems around these applications etc. However, efficient application scaling and management is highly relevant when it comes to maximizing the return on investment of developed applications. To increase efficiency of individual applications, a more efficient and holistic approach for application lifecycle management - from application development, deployment, and scaling through to update management is required. For this purpose, new technologies such as containers and container orchestration, but also many new concepts such as DevOps, CI/CD, and microservices architectures, have been developed and introduced to the cloud.

However, a new shift now emerges, called cloud-native. Cloud-native describes an approach where new technologies and concepts (such as containers, container orchestration, DevOps, and microservices), initially developed for the cloud, can be utilized also outside the cloud. This allows to build and run scalable applications across combined scenarios, covering the edge and the cloud. Cloud-native applications are typically built as a set of microservices that run in containers, managed by container orchestration tools and deployed by using a DevOps platform. Another aspect that is detrimental to the agility of applications is the tremendous heterogeneity on the shop floor. A heterogeneous installed base of machinery and equipment is the norm, not the exception. Connectivity to all different devices, from different vendors and with different ages, is critical to enable agile application development around these devices.

Guaranteeing the availability of industrial production systems and related software is a core requirement to maximize the reliability and resiliency of operations. An industrial-grade application management system has to ensure a stable environment, including automated self-healing and restarting when components fail. Typical challenges related to the availability of software can be caused by the network itself or by infected software. Secure software management systems are naturally key to avoid malicious software deployments.

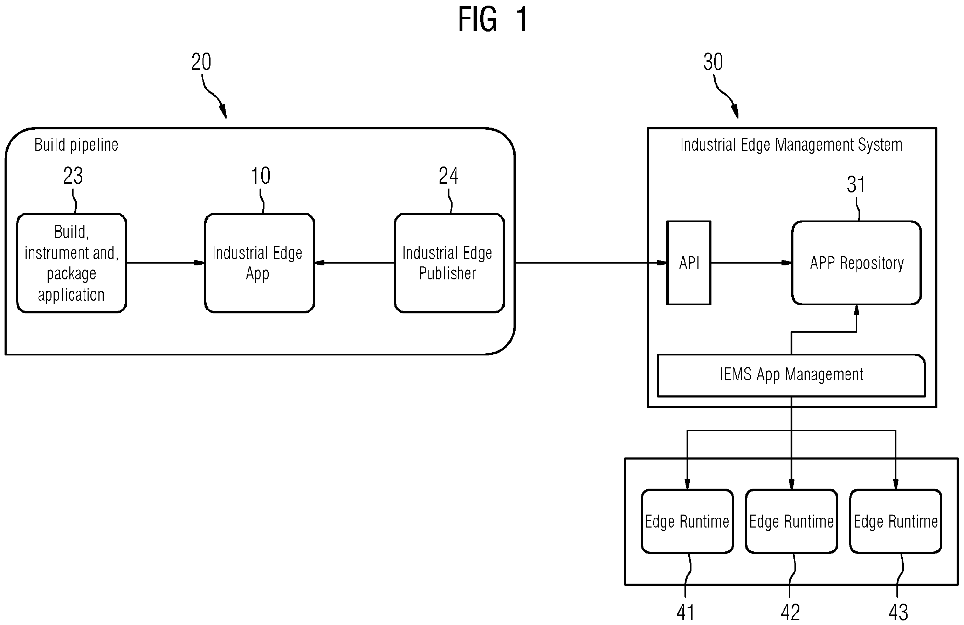

In a scenario as shown in Figure 1, application processing happens mainly at the edge and the app store or app repository runs in the cloud. This setup is a helpful combination of edge and cloud capabilities. While data processing at the edge allows to overcome latency, network traffic, connectivity, and know-how control concerns, the cloud can be leveraged as an instrument for effective application sharing and management via a cloud-based app store. In addition and if appropriate, some application processing can be performed in the cloud. This would mean, for example, that one or the other uncritical application can move to cloud processing, while all critical applications (latency, data volume, know-how) are kept for processing at the edge. What the split of applications looks like depends fully on the needs of the individual manufacturing company. While shifts between the groups of critical vs. uncritical applications are certainly possible, a more restrictive start is highly recommended.

The industrial edge management system 30 enables central management of devices and apps. The edge management system enables monitoring the status of all connected devices, and install edge apps and software functions on the desired edge devices, e.g., on a edge runtime 41, 42, 43, by remote. The industrial edge management system 30 also provides access to one or more industrial edge applications, e.g., in the app repository or via its connection to an ecosystem of globally available apps. The industrial edge management system may be hosted in on the production site, or centrally in a cloud system (e.g. MindSphere). The industrial edge management system in the cloud enables to centrally manage globally distributed edge devices.

Build automation is the process of automating the creation of a software build and the associated processes including: compiling computer source code into binary code, packaging binary code, and optionally running automated tests. In Figure 1 a build pipeline 20 for building a new version of an industrial edge application 10 is shown. The build pipeline comprises a component 23 for building, instrumenting and packaging the new version of the industrial edge application 10. As will be shown later the build pipeline may comprise a software repository for storing one or more industrial edge applications.

Central application management by the industrial edge management system 30 reduces the cost and effort of maintenance and updates, which previously had to be done manually. Devices and industrial edge applications can be adapted to new requirements at any time.

New industrial edge apps can be distributed to connected edge devices and/or edge runtime 41, 42, 43. For example, an edge runtime 41, 42, 43 can also be installed on devices like industrial PCs, which allows sharing the benefits of edge computing across an entire infrastructure. The edge runtime may offer a remote manageable application hosting engine based on industrial grade hardware and LINUX operating system. The application hosting engine may be fully containerized and may integrate industrial edge applications with management, logging, and/or monitoring with the corresponding backend.

An example of an industrial edge application 10 is the SIMATIC Flow Creator by way of which it becomes easy to launch a data analysis. The graphic user interface of SIMATIC Flow Creator helps to create individual data processing and connectivity solutions based on predefined functional modules. Another example of an industrial edge application 10 is SIMATIC Machine Insight which helps to improve machine maintenance and diagnostics. By observing diagnostic data, machine status, and alarms, SIMATIC Machine Insight helps finding the underlying causes of problems in the easiest way and do a better job of targeting service activities. Furthermore, the industrial edge application SIMATIC Notifier ensures obtaining relevant machine status information directly on mobile devices. Thus, for example, push notifications about missing work resources can be automatically distributed worldwide.
As shown in Figure 1, the industrial edge management system 30 may provide an HTTP(s) based API interfacing with an industrial edge publisher 24 or publishing application. The industrial edge publisher 24 may be part of the build pipeline 20 and can be used to publish a new version of an industrial edge application 10 to the industrial edge management system 30. Thus, the build pipeline component 23 may produce a new version of the industrial edge application 10. The industrial edge application may be stored in the form of a file. The file may comprise one or more container images which belong to the industrial edge application 10. Furthermore, the file may comprise one or more certificates that were used to sign the industrial edge application. Furthermore, the file may comprise a container compose file describing the industrial edge application. Furthermore, the file may comprise a description of the functionality of the industrial edge application. The industrial edge publisher takes the industrial edge application and publishes it to the industrial edge management system, e.g., using synchronous HTTP communication, via the API of the industrial edge management system 30. The industrial edge management system then stores the industrial edge app in a software repository 31 of the industrial edge management system. An application management component of the industrial edge management service gets the industrial edge application from the software repository 31 and distributes it to the one or more edge runtimes 41, 42, 43 on the one or more device.

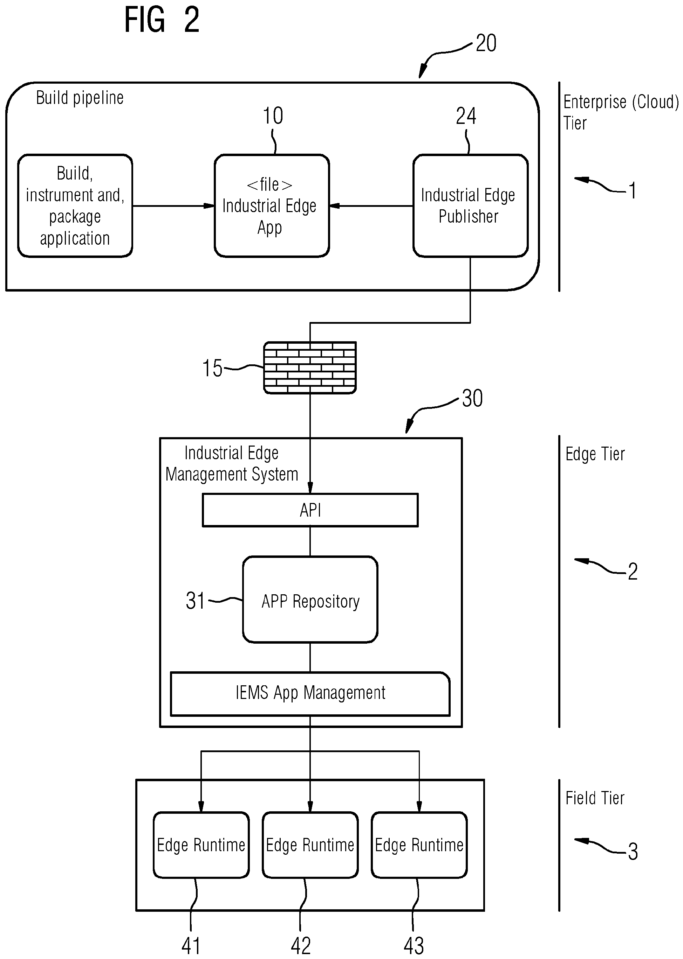

The system described in Figure 1 works well in networks with relaxed security requirements. However, large enterprises often have a tiered approach to network security where the communication channel between the build pipeline 20 (or the user building the app, if this is done manually) and the industrial edge management system is blocked by a firewall as shown in Figure 2. In Figure 2 a typical multi-tiered network architecture comprising a blocking firewall 15 between the industrial edge publisher 24 and industrial edge management system's API is shown. The build pipeline 20 is part of a first tier 1, whereas the industrial edge management system 30 is part of a second tier 2 and the edge runtime 41, 42, 43 is part of a third tier 3 of the multi-tiered software architecture. The firewall 15 blocks the communication from industrial edge publisher in the first tier 1 to the industrial edge management system 30 second tier 2. Hence it may be required that the firewall communication between the tiers must be open.

It is possible to use asynchronous protocols like MQTT to deploy one or more industrial edge applications, for example for updating a machine learning model. It is also possible to keep an outgoing connection from the industrial edge management system 30 to a system in first tier 1.

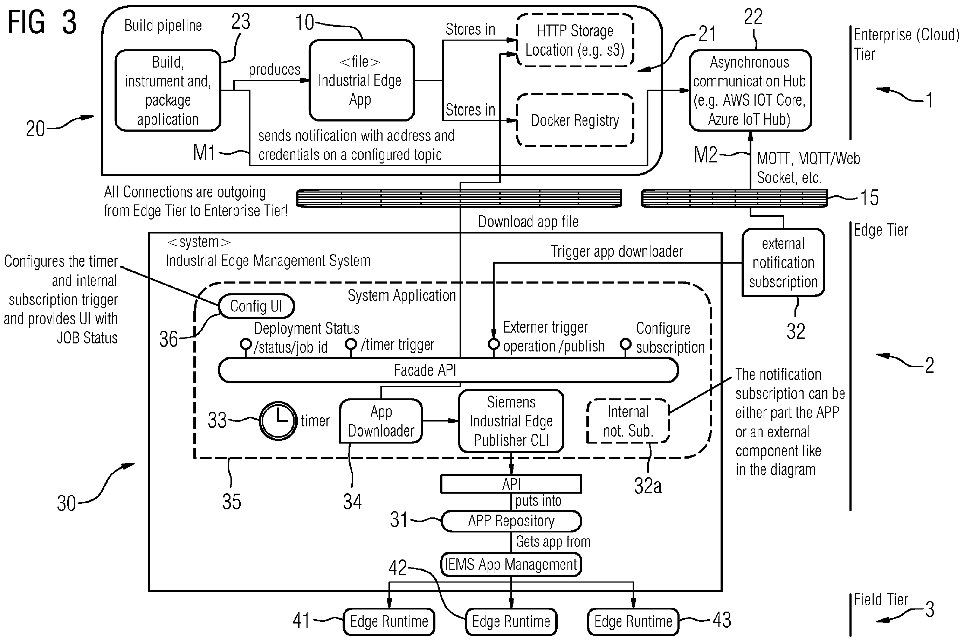

Turning to Figure 3 an industrial edge management system 30 in the second tier 2 comprising only outgoing connections to the first tier 1 is shown. The industrial edge management system 30 operative to perform the following step: receive an asynchronous trigger that a new version of industrial edge application is available in available, e.g., at a specified location (e.g. docker registry, s3 storage, direct URL download...). This trigger may be received either via API call or via a subscription component 32 of the industrial edge management system 30, which subscription component 32 is subscribed to a notification service such as an interface engine of the first tier, i.e. the cloud-/enterprise tier. The subscription component 32 may be a MQTT subscriber that is subscribed to a topic. In MQTT, the word "topic" refers to an UTF-8 string that the broker uses to filter messages for each connected client. The subscription component 35 may either be external to a system application 35 or may be part of said system application 35 as illustrated by reference sign 32a in Figure 3.

The industrial edge management system 30 may further be operative to perform the following step: create a timer-based trigger which causes the industrial edge management application 30 to look for new version of the application in the specified location (e.g., docker registry, s3 storage...). To that end, a corresponding request may be sent to the software repository 21 of the first tier 1. For example, the application downloader component 34 may download the industrial edge application from the repository 21 to the repository 31.

The industrial edge management system 30 may further be operative to perform the following step: provide information about running publishing jobs. Therein, a status of a publishing job may be displayed via a user interface 36. The status may provide information about the industrial edge application's availability in the industrial edge management system 30 and/or in build pipeline 20.

The industrial edge management system 30 may further be operative to perform the following step: provide means to configure the (internal) notification subscription component 32, 32a. For example, the user interface 36 may serve for configuring the topics the notification subscription component 32, 32a subscribes to.

Hence, an industrial edge management system 30 is proposed that comprises one or more of the following components:
- A user interface 36 for configuring a system application 35. The user interface 36 may comprise a web interface for configuring the timer, the (asynchronous) subscription component, and/or the job status.
- A system application 35 comprising one or more APIs, e.g., a HTTP/Rest based API, capable of one or more of the following operations, i.e. endpoints:
   o /timer (for timer configuration)
   o /publish (triggers new deployment job)
   o /configure (configures the internal subscription)
   o /status/{jobid} (provides information about the running deployment jobs)

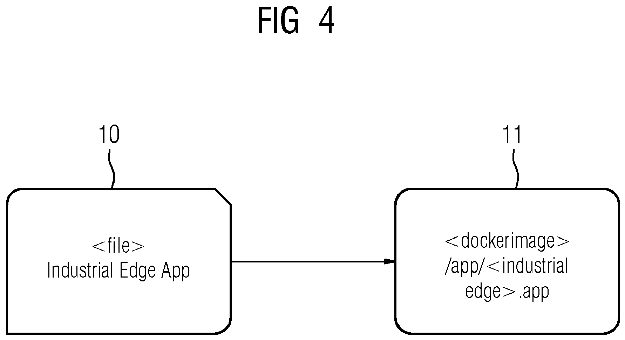

Turning to Figure 4, where an industrial edge application 10 and a corresponding container image is shown. A container is a standard unit of software that packages up code and all its dependencies so the industrial edge application 10 can run reliably from one computing environment to another. A container image is a lightweight, standalone, and/or executable package of software that includes everything needed to run the industrial edge application 10: code, runtime, system tools, system libraries and settings.

The industrial edge applications 10 are usually packaged as a set of docker images 11, but the addition of the certificates and the .app files makes it complicated to refer them only by one location. Also, the system application 35 may not have access to the docker daemon running on the industrial edge management system 30. These problems can be avoided by one or more of the following steps:
- the one or more industrial edge application file is wrapped in container image.
- the app downloader component 34 may use container-compatible download library to download the industrial edge application 10 instead of a 'container pull' command.

A 'container pull' command serves for downloading a container image or a repository locally on the host from a public or private registry, such as the repository 21 in the cloud or enterprise tier 1.

The solution proposed allows the integration of industrial edge management system 30 with one or more build pipelines 20, e.g., CD/CI pipelines, in cases when there is no direct network access possible from the cloud tier 1 to the edge tier 2.

## Claims

1. A method of delivering a new version of an industrial edge application (10) to an industrial edge management system (30) in a multi-tiered software architecture (1, 2, 3), the method comprising the steps of:
- creating, by a build pipeline (20) in a cloud tier (1) of the multi-tiered software architecture, the new version of the industrial edge application (10) and storing, by the build pipeline (20), the new version of the industrial edge application (10) in a software repository (21) of the build pipeline (20),
- obtaining, by the industrial edge management system (30) in an edge tier (2) of the multi-tiered software architecture, a trigger indicating that the new version of the industrial edge application (10) is available in the software repository (21) of the build pipeline (20),
- loading, by the industrial edge management system (30), based on the trigger the new version of the industrial edge application (10) from the software repository (21) of the build pipeline (20) to a software repository (31) of the industrial edge management system (30).

2. The method according to the preceding claim, further comprising the step of
- configuring, e.g., by the industrial edge management system (30), an interface engine (21), preferably an MQTT broker, in the cloud tier (1) of the multi-tiered software architecture in order to obtain, by the industrial edge management system (30) from the build pipeline (20), a message comprising the trigger.

3. The method according to the preceding claim, further comprising the step of
- transmitting, by the build pipeline (20), a message (M1) comprising the trigger to the interface engine (22), the trigger corresponding to a notification about the new version of the industrial edge application (10) and
- transmitting, by the interface engine (22), a message (M2) comprising the trigger to the industrial edge management system.

4. The method according to the preceding claim, further comprising the step of:
- sending, by a publisher (23) of build pipeline, a message (M1) comprising a topic to the interface engine (22).

5. The method according to the preceding claim, wherein the step of configuring the interface engine comprises:
- subscribing, by a subscriber (32) of the industrial edge management system (30), to messages of a topic.

6. The method according to any one of the preceding claims, further comprising the step of
- configuring a timer (33), wherein the timer (33) serves for initiating the trigger for loading, by the industrial edge management system (30), the new version of the industrial edge application (10) from the software repository (21) of the build pipeline (20) to the software repository (31) of the industrial edge management system (30).

7. The method according to any one of the preceding claims, wherein the step of creating and storing, by the build pipeline (20), the new version of the industrial edge application (10) in a software repository (21) of the build pipeline (20), further comprises:
- wrapping the new version of the industrial edge application (10) in a container image (11), wherein the container image (11) comprises the new version of the industrial edge application (10) together with one or more certificates associated with the new version of the industrial edge application (10).

8. The method according to any one of the preceding claims, wherein the step of loading, by the industrial edge management system (30), based on the trigger the new version of the industrial edge application (10) from the software repository (21) of the build pipeline (20) to a software repository (31) of the industrial edge management system (30), further comprises:
- loading, by a downloader component (34) of the industrial edge management system (30), the new version of the industrial edge application (10) using a container-compatible download library, e.g., docker-compatible download library.

9. The method according to any one of the preceding claims, further comprising the step of
- deploying, by the industrial edge management system (30), the new version of the industrial edge application (10) from the software repository (31) of the industrial edge management system (30) to an edge runtime (41, 42, 43) in a field tier (3) of the multi-tiered software architecture.

10. An industrial edge management system (30) in a multi-tiered (1, 2, 3) software architecture, operative to obtain a trigger indicating that a new version of an industrial edge application (10) is available in a software repository (21) of a build pipeline (20), further operative to load based on the trigger the new version of the industrial edge application (10) from the software repository (21) of a build pipeline (20) to a software repository (31) of the industrial edge management system (30).

11. A multi-tiered (1, 2, 3) software architecture comprising a build pipeline (20) and an industrial edge management system (30) according to the preceding claim.
